# EUROPÄISCHE PATENTSCHRIFT

(11) **EP 1 140 532 B1**
(45) Veröffentlichungstag und Bekanntmachung des Hinweises auf die Patenterteilung: **13.07.2005**
(21) Anmeldenummer: 99963485.0
(22) Anmeldetag: 10.12.1999
(51) Int. Cl.: B60H 1/04

(54) **HEIZUNGSANLAGE FÜR DEN INNENRAUM EINES FAHRZEUGES**
HEATING SYSTEM FOR THE INTERIOR OF A VEHICLE
CHAUFFAGE POUR HABITACLE DE VEHICULE

(30) Priorität: 21.12.1998 DE 19858988
(43) Veröffentlichungstag der Anmeldung: 10.10.2001
(73) Patentinhaber: Volkswagen Aktiengesellschaft, 38436 Wolfsburg (DE)
(72) Erfinder: GRUBEL, Hartmut, D-38108 Braunschweig (DE); MEYER, Manfred, D-38474 Tülau (DE); LEIPELT, Markus, D-38448 Wolfsburg (DE); SCHNUTE, Harald, D-38108 Braunschweig (DE)
(74) Vertreter: Reinhardt, Harry
(86) Internationale Anmeldenummer: PCT/EP1999/009777
(87) Internationale Veröffentlichungsnummer: WO 2000/037272

(56) Entgegenhaltungen:
- DE-A- 4 033 261
- DE-A- 19 524 424
- DE-C- 4 431 191

## Beschreibung

Die Erfindung betrifft eine Heizungsanlage für den Innenraum eines Fahrzeuges mit den im Oberbegriff der Ansprüche 1, 13 beziehungsweise 16 genannten Merkmalen.

Heizungsanlagen der gattungsgemäßen Art sind bekannt. Hierbei ist eine flüssigkeitsgekühlte Brennkraftmaschine in einen Kühlkreislauf eingebunden, innerhalb dem ein Kühlmittel, in der Regel Wasser, zirkuliert. Das Kühlmittel wird über einen Kühler geführt, so daß eine Kühlung der Brennkraftmaschine erfolgen kann. Es ist bekannt, zur Heizung des Innenraumes des Fahrzeuges von dem Kühlkreislauf einen Heizkreislauf abzuzweigen, der über eine Heizeinrichtung, insbesondere einen Wärmetauscher, geführt wird. Mittels des Wärmetauschers kann eine Heizluft erwärmt werden, die durch eine Strömungsmaschine über ein Kanalsystem in den Fahrzeuginnenraum führbar ist. Entsprechend einer Heizleistungsanforderung durch einen Fahrzeugführer oder eine automatische Temperaturregelung erfolgt eine unterschiedlich starke Erwärmung des Luftstromes durch den Wärmetauscher. Hierzu ist bekannt, einen mehr oder weniger großen Anteil des Luftstromes über den Wärmetauscher zu leiten.

Ferner ist bekannt, in den Kühlkreislauf der Brennkraftmaschine eine Steuereinrichtung zu integrieren, über die eine erste Soll-Kühlmitteltemperatur für die Brennkraftmaschine einstellbar ist. Diese erste Soll-Kühlmitteltemperatur ist so gewählt, daß eine ausreichende Kühlung der Brennkraftmaschine erfolgen kann. Bei bestimmten Betnebszustanden des Fahrzeuges, beispielsweise einer relativ hohen Fahrgeschwindigkeit, einer relativ großen Lastanforderung an die Brennkraftmaschine oder einer relativ hohen Luftansaugtemperatur für die Brennkraftmaschine, ist bekannt, die zuvor eingestellte erste Soll-Kühlmitteltemperatur auf eine zweite Soll-Kühlmitteltemperatur zu verändern, insbesondere abzusenken. Hierdurch wird sichergestellt, daß eine Überhitzung der Brennkraftmaschine nicht erfolgen kann. Bekannt ist, die Absenkung auf die zweite Soll-Kühlmitteltemperatur über ein elektrisch ansteuerbares Dehnstoffelement eines Thermostaten der Steuereinrichtung zur Regulierung der Kühlmitteltemperatur auszulösen. Hierdurch kann eine höhere Kühlmitteltemperatur simuliert werden, so daß über die Steuereinrichtung ein Volumenstrom des Kühlmittels über einen in den Kühlkreislauf eingebundenen Kühler vergrößert wird. Dies kann beispielsweise durch Öffnen eines Ventiles innerhalb des Kühlkreislaufes erfolgen. Mit dieser sogenannten Kennfeld-Kühlung wird jederzeit eine optimale Kühlung der Brennkraftmaschine bei unterschiedlichen Betriebsbedingungen erreicht.

Durch die Kopplung des Heizkreislaufes der Heizungsanlage des Fahrzeuges mit dem Kühlkreislauf der Brennkraftmaschine ist jedoch nachteilig, daß bei Betrieb des Kühlkreislaufes mit der ersten Soll-Kühlmitteltemperatur, die beispielsweise bei > 100 °C liegt, relativ hohe Ausströmtemperaturen der Heizluft in den Innenraum des Fahrzeuges auftreten können. Hierbei können unter ungünstigen Parametern Ausströmtemperaturen von > 80 °C erreicht werden. Diese relativ hohen Temperaturen können einerseits zu einer Verletzung von Fahrzeuginsassen führen, und andererseits ist eine relativ hohe Wärmeabstrahlung auf weitere Komponenten (Anzeige-, Bedienelemente, Audiogeräte oder dergleichen) des Fahrzeuges, insbesondere in der Nähe der Verteilungskanäle für die Heizluft, gegeben. Ferner ist nachteilig, daß durch die Schwankung der Kühlmitteltemperatur zwischen der ersten Soll-Kühlmitteltemperatur und der zweiten Soll-Kühlmitteltemperatur bei gleicher Heizleistungsanforderung schwankende Ausströmtemperaturen auftreten können, die zu Komforteinbußen beim Betrieb der Heizungsanlage führen.

Der Erfindung liegt die Aufgabe zugrunde, eine Heizungsanlage der gattungsgemäßen Art zu schaffen, bei der in einfacher Weise eine Begrenzung der Ausblastemperatur erzielbar ist und deren Schwankung auf ein Minimum reduziert werden kann.

Erfindungsgemäß wird diese Aufgabe durch eine Heizungsanlage mit den im Anspruch 1 genannten Merkmalen gelöst. Dadurch, daß in Abhängigkeit einer Heizleistungsanforderung wenigstens eine der Soll-Kühlmitteltemperaturen verändert ist, vorzugsweise eine Differenz zwischen der ersten Soll-Kühlmitteltemperatur und der zweiten Soll-Kühlmitteltemperatur für die Brennkraftmaschine verändert ist, insbesondere verkleinert ist, läßt sich in einfacher Weise einerseits die maximale Luftaustrittstemperatur der Heizluft auf einen vorgebbaren Wert begrenzen. Andererseits kann durch Verkleinerung der Differenz zwischen den Soll-Kühlmitteltemperaturen auch deren unterschiedlicher Einfluß auf eine Erwärmung der Heizluft minimiert werden, so daß letztendlich eine Schwankung der Austrittstemperatur der Heizluft reduzierbar ist. Die Auswirkungen der Verkleinerung der Differenz zwischen den Soll-Kühlmitteltemperaturen auf die Kühlung der Brennkraftmaschine läßt sich vernachlässigen, da eine Differenz zwischen den Soll-Kühlmitteltemperaturen nicht gänzlich aufgehoben wird, so daß die mit der Kennfeld-Kühlung der Brennkraftmaschine verbundenen Vorteile im wesentlichen erhalten bleiben.

In bevorzugter Ausgestaltung der Erfindung ist vorgesehen, daß die Veränderung der Soll-Kühlmitteltemperaturen bei unterschiedlich hoher Heizleistungsanforderung unterschiedlich ist, insbesondere eine Differenz der Soll-Kühlmitteltemperaturen unterschiedlich verkleinert ist, wobei vorzugsweise vorgesehen ist, daß, je höher die Heizleistungsanforderung ist, eine kleinere Differenz zwischen den Soll-Kühlmitteltemperaturen eingestellt wird. Hierdurch wird erreicht, daß insbesondere bei relativ hoher Heizleistungsanforderung, insbesondere, wenn die Heizungsanlage in Nähe ihrer Vollastgrenze betrieben wird, ein Übersteigen einer vorgebbaren maximalen Ausblastemperatur verhindert wird. Ferner wird vorteilhaft erreicht, daß lediglich in den relativ seltenen Fällen einer maximalen Heizleistungsanforderung eine Differenz zwischen den Soll-Kühlmitteltemperaturen relativ gering ist, so daß eine Beeinträchtigung der Kühlung der Brennkraftmaschine in den überwiegenden Bereichen der Heizleistungsanforderung vernachlässigbar ist, und lediglich bei relativ hoher, nahe einer maximalen Heizleistungsanforderung die Vorteile der Kennfeld-Kühlung für die Brennkraftmaschine nicht vollständig in Anspruch genommen werden können. Insbesondere, wenn eine hohe Heizleistungsanforderung erfolgt, liegen in der Regel niedrige Außentemperaturen vor, so daß die an sich vorteilhafte Kennfeld-Kühlung der Brennkraftmaschine, die einen lastabhängigen Überhitzungsschutz bildet, weniger notwendig ist, da aufgrund der relativ niederen Außentemperaturen eine bessere Kühlung der Brennkraftmaschine erfolgen kann.

In weiterer bevorzugter Ausgestaltung der Erfindung ist vorgesehen, daß ein Stellmittel zur Abforderung einer Heizleistungsanforderung der Heizungsanlage mit einem Signalgeber, vorzugsweise einem Potentiometer, gekoppelt ist, das ein der Stellung des Stellmittels entsprechendes Signal an ein Steuergerät zur Ansteuerung der, die Soll-Kühlmitteltemperatur einstellenden Steuereinrichtung gibt. Hierdurch kann ein unmittelbarer Zusammenhang zwischen der Heizleistungsanforderung und der Einstellung der Soll-Kühlmitteltemperatur in einfacher Weise hergestellt werden. Die Veränderung, insbesondere Absenkung der Differenz der Soll-Kühlmitteltemperaturen, kann somit unmittelbar, das heißt ohne wesentliche Zeitverzögerung, erfolgen.

Ferner ist in bevorzugter Ausgestaltung der Erfindung vorgesehen, daß in Abhängigkeit der Heizleistungsanforderung die erste (höhere) Soll-Kühlmitteltemperatur abgesenkt ist und/oder die zweite (tiefere) Soll-Kühlmitteltemperatur angehoben ist. Insbesondere ist vorteilhaft, wenn in Abhängigkeit eines Grades der Heizleistungsanforderung die erste Soll-Kühlmitteltemperatur und/oder die zweite Soll-Kühlmitteltemperatur in unterschiedlichen, vorgebbaren Bereichen variiert werden. Hierdurch wird vorteilhaft möglich, daß entsprechend der tatsächlichen Heizleistungsanforderung eine unterschiedliche Verkleinerung der Differenz zwischen der ersten und der zweiten Soll-Kühlmitteltemperatur erfolgen kann, indem entweder die erste Soll-Kühlmitteltemperatur herabgesetzt wird, die zweite Soll-Kühlmitteltemperatur heraufgesetzt wird oder die erste Soll-Kühlmitteltemperatur herabgesetzt und die zweite Soll-Kühlmitteltemperatur heraufgesetzt wird. In jeder der drei Möglichkeiten wird erreicht, daß eine Differenz zwischen den Soll-Kühlmitteltemperaturen eingestellt ist, die zu einer Verringerung der Schwankung der Austrittstemperatur der Heizluft führt. Je nachdem, wie hoch eine Heizleistungsanforderung ist, kann zwischen den verschiedenen Möglichkeiten der Verringerung der Differenz zwischen den Soll-Kühlmitteltemperaturen gewählt werden. Bevorzugt ist vorgesehen, daß innerhalb des Steuergerätes verschiedene Algorithmen abgespeichert sind, die in Abhängigkeit der Heizleistungsanforderung die möglichen Variationen der Soll-Kühlmitteltemperaturen einstellen. Somit kann in einfacher Weise eine Umstellung der Soll-Kühlmitteltemperaturen in Abhängigkeit einer Heizleistungsanforderung erfolgen.

Erfindungsgemäß wird die Aufgabe weiterhin durch eine Heizungsanlage mit den im Anspruch 13 genannten Merkmalen gelöst. Dadurch, daß in einem Vorlauf (oder Rücklauf) des Heizkreislaufes ein Vorlaufregelventil (Regelventil) angeordnet ist, das in Abhängigkeit einer Heizleistungsanforderung den Vorlauf drosselt, insbesondere bei einer Heizleistungsanforderung von 0 % den Vorlauf schließt, läßt sich ebenfalls die maximale Luftaustrittstemperatur der Heizluft auf einen vorgebbaren Wert begrenzen. Durch das Vorlaufregelventil kann die Heizleistung unabhängig von Temperaturschwankungen des Kühlmittels eingestellt werden, so daß die Heizleistung nicht vom Betriebszustand der Brennkraftmaschine beeinflußt wird.

Die Aufgabe wird ferner durch eine Heizungsanlage mit den im Anspruch 16 genannten Merkmalen gelöst. Dadurch, daß ein von einem Heizungssteuergerät generiertes Signal für einen Stellantrieb einer Temperaturmischklappe durch ein von der Kühlmitteltemperatur abhängiges Steuersignal verändert ist, läßt sich ebenfalls in einfacher Weise eine maximale Luftaustrittstemperatur der Heizluft auf einen vorgebbaren Wert begrenzen.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: ein Blockschaltbild einer Heizungsanlage eines Fahrzeuges;
- Figur 2: Temperaturregelkurven der Soll-Kühlmitteltemperatur eines Kühlmittelkreislaufes einer Brennkraftmaschine;
- Figur 3: ein Blockschaltbild einer Heizungsanlage in einer zweiten Ausführungsvariante und
- Figur 4: ein Blockschaltbild einer Heizungsanlage in einer dritten Ausführungsvariante.

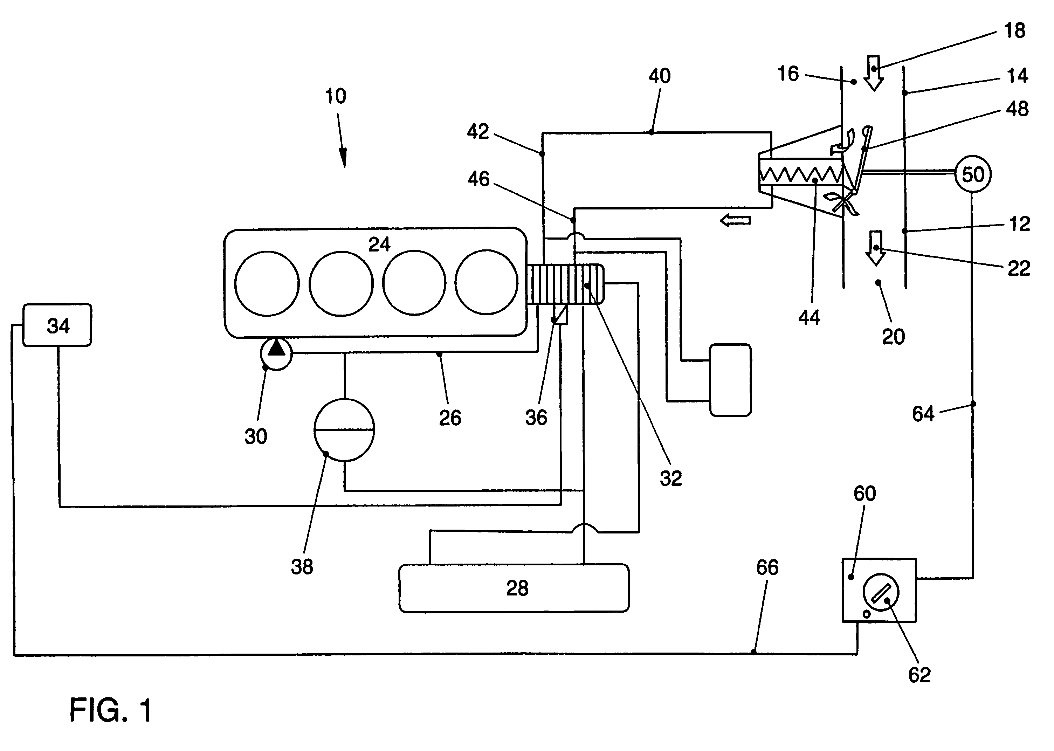

Figur 1 zeigt ein Blockschaltbild einer insgesamt mit 10 bezeichneten Heizungsanlage eines Fahrzeuges. Die Heizungsanlage 10 umfaßt ein Heizgerät 12, durch das ein Kanalsystem 14 zum Transport von Luft führt. Das Kanalsystem 14 besitzt an seinem stromaufwärtigen Ende 16 wenigstens einen - nicht dargestellten - Lufteinlaß zum Zuführen von Frischluft 18 und an seinem stromabwärtigen Ende 20 wenigstens einen Luftauslaß, der in einen Innenraum eines Fahrzeuges mündet. Das Kanalsystem 14 ist verzweigt ausgeführt und mündet üblicherweise in einer Vielzahl von Luftauslässen, beispielsweise in einer Instrumententafel, im Fußraum, im Türbereich oder dergleichen des Fahrzeuges. Die Frischluft 18 wird entweder als Außenluft, von außerhalb des Fahrzeuges, oder als Innenluft, aus einem Innenraum des Fahrzeuges (Umluftbetrieb), angesaugt. Zum Aufrechterhalten einer Luftströmung ist in das Kanalsystem 14 eine hier nicht dargestellte Strömungsmaschine integriert. Zum wahlweisen Aufheizen der Frischluft 18 wird diese durch das Heizgerät 12 geführt, so daß eine hier lediglich schematisch angedeutete Heizluft 22 dem Innenraum des Fahrzeuges zuführbar ist.

Das Fahrzeug besitzt eine Brennkraftmaschine 24, die flüssigkeitsgekühlt ist. Hierzu ist ein Kühlkreislauf 26 vorgesehen, in den die Brennkraftmaschine 24, ein Kühler 28, eine Fördereinrichtung 30 sowie eine Steuereinrichtung 32 integriert sind. Die Steuereinrichtung 32 ist über ein Steuergerät 34 ansteuerbar, indem beispielsweise über ein Ventil 36 ein Durchlaßquerschnitt zu dem Kühler 28 beeinflußbar ist. Ferner ist in dem Kühlkreislauf 26 ein Ausgleichsbehälter 38 integriert, der eine temperaturbedingte Volumenänderung eines, durch den Kühlkreislauf 26 strömenden Kühlmittels, beispielsweise Wasser, ausgleicht.

Der Kühlkreislauf 26 zeigt folgende, an sich bekannte Funktion:
Beim Betrieb der Brennkraftmaschine 24 erfolgt über die Fördereinrichtung 30 eine Umwälzung des Kühlmittels innerhalb des Kühlkreislaufes 26. Ein Volumenstrom des Kühlmittels, der die Brennkraftmaschine 24 passiert, ist abhängig von einer Antriebsdrehzahl der Fördereinrichtung 30. Über die Steuereinrichtung 32 kann entsprechend einer Ansteuerung des Ventiles 36 ein über den Kühler 28 geführter Volumenstrom des Kühlmittels variiert werden. Hierdurch wird es möglich, am Eingang der Brennkraftmaschine 24 des Kühlkreislaufes 26 eine Soll-Kühlmitteltemperatur durch das Steuergerät 34 einzustellen. Bei einer sogenannten Kennfeld-Kühlung der Brennkraftmaschine 24 werden mit Hilfe des Steuergerätes 34 unterschiedliche Soll-Kühlmitteltemperaturen eingestellt. Bei Normalbetrieb der Brennkraftmaschine 24 wird eine erste Soll-Kühlmitteltemperatur TK₁ von beispielsweise 110 °C eingestellt. Bei besonderen Lastanforderungen an die Brennkraftmaschine, beispielsweise bei hoher Geschwindigkeit, beispielsweise > 130 km/h, einer hohen Lastanforderung, bei großer Beschleunigung, Bergfahrt oder dergleichen, wird mittels des Steuergerätes 34 die Steuereinrichtung 32 so angesteuert, daß am Eingang der Brennkraftmaschine eine zweite Soll-Kühlmitteltemperatur TK₂ von beispielsweise 90 °C eingestellt wird. Dies wird erreicht, indem über das Steuergerät 34 einem Temperaturmeßglied (Dehnstoffelement) in der Steuereinrichtung 32 eine höhere Kühlmitteltemperatur simuliert wird, so daß über das Ventil 36 durch Öffnen des Rücklaufes des Kühlmittelkreislaufes 26 eine Absenkung der Kühlmitteltemperatur von der ersten Soll-Kühlmitteltemperatur TK₁ auf die zweite Soll-Kühlmitteltemperatur TK₂ erfolgt. Somit kann beispielsweise die Kühlmitteltemperatur am Eingang der Brennkraftmaschine 24 zwischen 110 °C und 90 °C, abhängig von einer Lastanforderung an die Brennkraftmaschine 24, eingestellt werden.

Der Kühlkreislauf 26 ist mit einem Heizkreislauf 40 gekoppelt. Hierbei führt ein Vorlauf 42 zu einem Wärmetauscher 44, von dem ein Rücklauf 46 wiederum zum Kühlkreislauf 26 führt. Durch die Parallelschaltung des Heizkreislaufes 40 zum Kühlkreislauf 26 zirkuliert durch diesen ebenfalls das Kühlmittel, mit der über die Steuereinrichtung 32 eingestellten Soll-Kühlmitteltemperatur TK₁ oder TK₂. Der Wärmetauscher 24 ist über eine Temperaturmischklappe 48 mit dem Kanalsystem 14 verbindbar. Entsprechend einer Öffnungsstellung der Temperaturmischklappe 48 wird ein Teil der Frischluft 18 über den Wärmetauscher 44 geleitet. Somit kann entsprechend der Stellung der Temperaturmischklappe 48 eine Ausblastemperatur T_{A} der Heizluft 22 in dem Innenraum des Fahrzeuges gewählt werden. Der Öffnungsgrad der Temperaturmischklappe 48 ist abhängig von einer Heizleistungsanforderung für den Innenraum des Fahrzeuges. Die Heizleistungsanforderung kann durch eine automatische Temperaturregelung für den Innenraum des Fahrzeuges und/oder einen Fahrzeugführer ausgelöst werden. Entsprechend dieser Heizleistungsanforderung wird die Temperaturmischklappe 48 über einen Stellantrieb 50 geöffnet, so daß ein freier Strömungsquerschnitt des Kanalsystems 14 derart variiert wird, daß der Anteil der über den Wärmetauscher 44 geführten Frischluft 18 bei höherer Heizleistungsanforderung ansteigt.

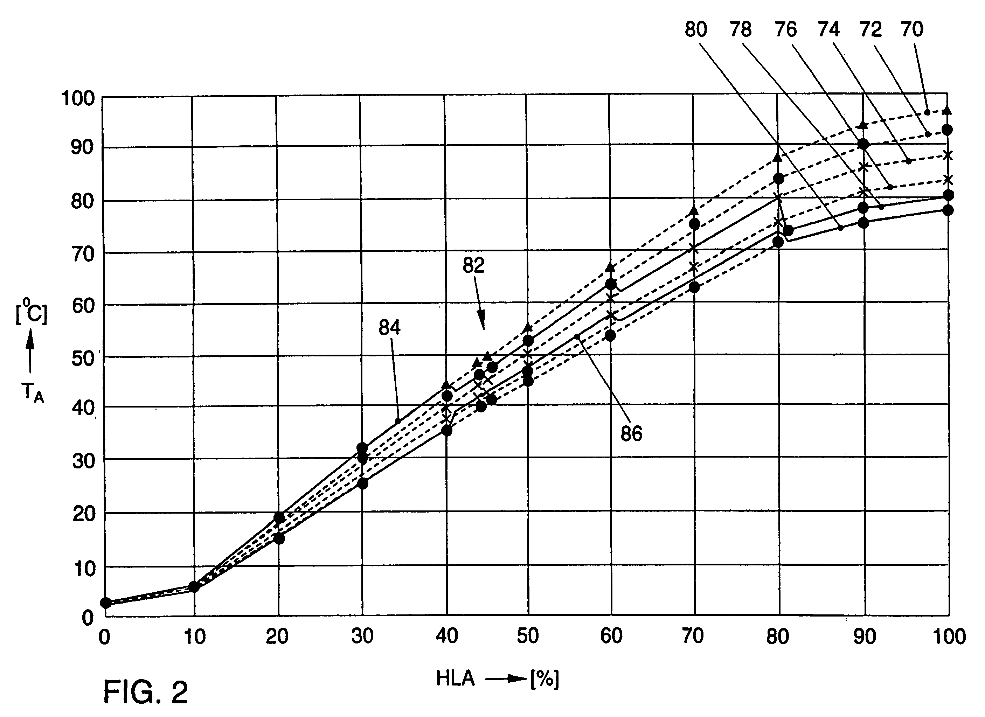

Auf die Zusammenhänge zwischen Soll-Kühlmitteltemperatur TK₁, TK₂, Heizleistungsanforderung und Ausblastemperatur T_{A} der Heizluft 22 wird anhand von Figur 2 noch näher eingegangen.

In Figur 1 ist ferner ein Heizungssteuergerät 60 angedeutet, daß ein Stellmittel 62 umfaßt, dessen Stellung der Heizleistungsanforderung für den Innenraum des Fahrzeuges entspricht. Das Stellmittel 62 kann beispielsweise durch ein Potentiometer gebildet sein. Entsprechend der Stellung des Stellmittels 62 erfolgt über eine Steuerleitung 64 die Ansteuerung des Stellantriebes 50 zum Einstellen der Temperaturmischklappe 48. Ferner ist das Heizungssteuergerät 60 über eine Steuerleitung 66 mit dem Steuergerät 34 verbunden.

Die in Figur 1 gezeigte Heizungsanlage 10 übt folgende Funktion aus, die anhand der Figur 2 verdeutlicht werden soll.

In Figur 2 ist in einem Diagramm die Ausblastemperatur T_{A} der Heizluft 22 über der Heizleistungsanforderung HLA aufgetragen. Die Heizleistungsanforderung HLA ist hierbei in Prozent zwischen 0 und 100 % eingeteilt, die sich entsprechend der Stellung des Stellmittels 62 des Heizungssteuergerätes 60 ergibt. Ferner ist eine Kurvenschar von Regelkurven eingetragen, die den Zusammenhang zwischen der Ausblastemperatur T_{A} und der Heizleistungsanforderung HLA in Abhängigkeit einer Kühlmitteltemperatur verdeutlicht. Insgesamt sind sechs Regelkurven eingetragen, wobei eine erste Regelkurve 70 für eine Kühlmitteltemperatur von 110 °C, eine zweite Regelkurve 72 für eine Kühlmitteltemperatur von 108 °C, eine dritte Regelkurve 74 für eine Kühlmitteltemperatur von 102 °C, eine vierte Regelkurve 76 für eine Kühlmitteltemperatur von 95 °C, eine fünfte Regelkurve 78 für eine Kühlmitteltemperatur von 93 °C und eine sechste Regelkurve 80 für eine Kühlmitteltemperatur von 90 °C steht.

In Figur 2 ist ein Feld 82 eingetragen, das von einer ersten, der Soll-Kühlmitteltemperatur TK₁ entsprechenden Regelkurve 84 und einer zweiten, der Soll-Kühlmitteltemperatur TK₂ entsprechenden Regelkurve 86 begrenzt ist. Zwischen den Soll-Kühlmitteltemperaturen TK₁ und TK₂ besteht entsprechend des Verlaufes der Regelkurven 84 und 86 eine Differenz, die abhängig von der Heizleistungsanforderung HLA variiert.

Bis zu einer Heizleistungsanforderung von 40 % verläuft die Regelkurve 84 zunächst auf der Regelkurve 70 und die Regelkurve 86 auf der Regelkurve 80. Eine Ausblastemperatur T_{A} bewegt sich bei einer Heizleistungsanforderung von 40 %, je nach durch das Steuergerät 34 vorgegebener Regelkurve für die Steuereinrichtung 32, zwischen zirka 35 und 45 °C. Steigt die Heizleistungsanforderung über 40 %, was durch die Stellung des Stellmittels 62, insbesondere einem mit dem Stellmittel 62 kombinierten Potentiometer, abgegriffen werden kann und über die Signalleitung 66 dem Steuergerät 34 mitgeteilt wird, springt die Regelkurve 84 auf den Verlauf der Regelkurve 72, und die Regelkurve 86 springt auf den Verlauf der Regelkurve 76. Hierdurch verringert sich die Differenz zwischen der ersten Soll-Kühlmitteltemperatur TK₁ und der zweiten Soll-Kühlmitteltemperatur TK₂ auf 13 K, da die erste Soll-Kühlmitteltemperatur TK₁ von 110 °C auf 108 °C abgesenkt ist und die zweite Soll-Kühlmitteltemperatur TK₂ von 90 °C auf 95 °C angehoben wurde. Dieser Verlauf der Regelkurven 84 und 86 gilt bis zu einer Heizleistungsanforderung von 60 %. Steigt die Heizleistungsanforderung über 60 %, springt der Verlauf der Regelkurve 84 auf den Verlauf der Regelkurve 74 und der Verlauf der Regelkurve 86 auf den Verlauf der Regelkurve 78. Hierdurch erfolgt eine Absenkung der ersten Soll-Kühlmitteltemperatur TK₁ auf 102 °C und eine Absenkung der zweiten Soll-Kühlmitteltemperatur TK₂ auf 93 °C. Die Differenz zwischen den Soll-Kühlmitteltemperaturen beträgt nunmehr 15 K. Übersteigt die Heizleistungsanforderung 80 %, springt die Regelkurve 84 auf den Verlauf der Regelkurve 78 und die Regelkurve 86 auf den Verlauf der Regelkurve 80. Hierdurch beträgt die erste Soll-Kühlmitteltemperatur TK₁ 93 °C und die zweite Soll-Kühlmitteltemperatur TK₂ 90 °C. Eine Differenz zwischen den Soll-Kühlmitteltemperaturen beträgt 3 K.

Anhand des in Figur 2 eingetragenen und erläuterten Verlaufes der Regelkurven 84 und 86, die das Regelfeld 82 bestimmen, mit dem die Soll-Kühlmitteltemperatur des Kühlkreislaufes 26 in Abhängigkeit einer Heizleistungsanforderung bestimmt wird, wird deutlich, daß die Ausblastemperatur T_{A} auf einen maximalen Wert von zirka 80 °C begrenzt werden kann. Selbst bei relativ hoher Heizleistungsanforderung von über 80 % wird ein Ansteigen der Ausblastemperatur T_{A} über 80 °C verhindert. Ferner wird durch Variation der Differenz zwischen den Soll-Kühlmitteltemperaturen TK₁ und TK₂ entsprechend dem Verlauf der Regelkurven 84 und 86 erreicht, daß bei gleicher Heizleistungsanforderung HLA die Schwankung zwischen der Ausblastemperatur T_{A} minimiert ist. So schwankt beispielsweise bei einer Heizleistungsanforderung von 60 % die Ausblastemperatur nur in einem Bereich von zirka 58 °C bis 62 °C und bei einer Heizleistungsanforderung von 90 % in einen Bereich von zirka 76 °C bis 78 °C. Es wird also deutlich, daß durch Festlegen der Regelkurven 84 und 86, die beispielsweise in geeigneter Weise in Speicherelementen des Steuergerätes 34 ablegbar sind, von der Heizleistungsanforderung HLA abhängige Soll-Kühlmitteltemperaturen TK₁ und TK₂ eingestellt werden können. Hierdurch ergibt sich der erläuterte Vorteil, daß einerseits eine Begrenzung der maximalen Ausblastemperatur T_{A} möglich ist und andererseits eine Minimierung der Schwankung der Ausblastemperatur T_{A} erreicht wird.

Der Verlauf der Regelkurven 84 und 86 verändert sich gemäß der Darstellung in Figur 2 sprunghaft, beispielsweise bei Heizleistungsanforderungen von 40 %, 60 % und 80 %. Nach anderen Ausführungsbeispielen kann selbstverständlich die Änderung der Regelkurven 84 und 86 auch kontinuierlich über die Heizleistungsanforderung HLA erfolgen. Auch ist die Definition der Sprungpunkte bei anderen Heizleistungsanforderungen HLA möglich. Entscheidend ist die Verhinderung des Überschreitens einer maximalen Ausblastemperatur T_{A}. Gleichzeitig wird durch den Verlauf der Regelkurven 84 und 86 die Kennfeldkühlung für die Brennkraftmaschine 24 aufrechterhalten. Bei Normalbetrieb erfolgt die Einstellung der Kühlmitteltemperatur entsprechend der Regelkurve 84 auf den Wert TK₁ und bei besonderen Lastanforderungen die Einregelung der Kühlmitteltemperatur entsprechend dem Verlauf der Regelkurve 86 auf den Wert TK₂.

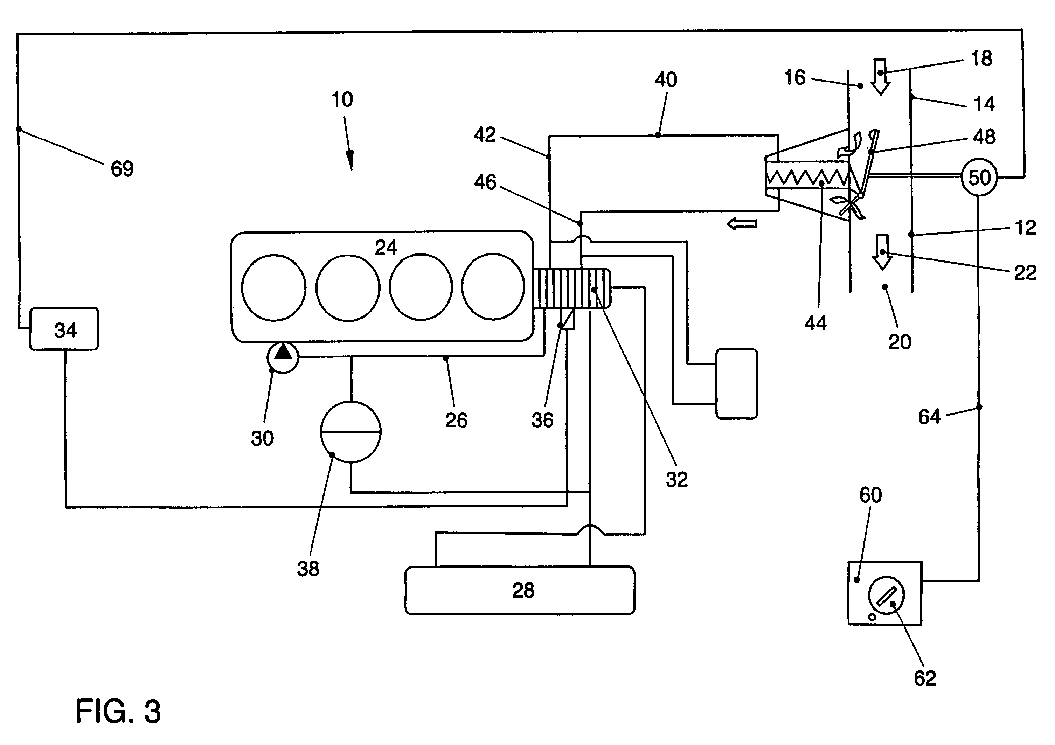

In Figur 3 ist eine weitere Heizungsanlage 10 in einem Blockschaltbild gezeigt. Gleiche Teile wie in Figur 1 sind mit gleichen Bezugszeichen versehen und nicht nochmals erläutert. Bei der Heizungsanlage 10 gemäß Figur 3 ist das Steuergerät 34 über eine weitere Steuerleitung 69 mit dem Stellantrieb 50 der Temperaturmischklappe 48 verbunden.

Hierdurch ergibt sich eine weitere Möglichkeit der Begrenzung der maximalen Ausblastemperatur T_{A}, die darin besteht, daß das Signal des Heizsteuergerätes 60 für den Stellantrieb 50, das über die Steuerleitung 64 übertragen wird, durch ein vom Steuergerät 34 geliefertes Signal über die Steuerleitung 69 beeinflußt wird. Durch das Heizsteuergerät 60 wird entsprechend der Heizleistungsanforderung eine bestimmte Offenstellung der Temperaturmischklappe 48 über den Stellantrieb 50 ausgelöst. Entsprechend dieser Heizleistungsanforderung wird dann ein entsprechender Anteil der Frischluft 18 über den Wärmetauscher 44 geführt. Gleichzeitig jedoch wird über das Steuergerät 34 eine Information entsprechend der Kühlmitteltemperatur T_{K} geliefert. Dieses der Kühlmitteltemperatur T_{K} entsprechende Signal bewirkt eine Korrektur der Offenstellung der Temperaturmischklappe 48 derart, daß beispielsweise bei einer Heizleistungsanforderung von 80 % und einer für die Kühlmitteltemperatur geltende Regelkurve 70 an sich gemäß dem Diagramm gemäß Figur 2 eine Ausblastemperatur T_{A} von zirka 88 °C zu erwarten ist. Das Steuergerät 34 jedoch bildet ein Korrektursignal für den Stellantrieb 50, so daß die Temperaturmischklappe 48, trotz bestehender Heizleistungsanforderung 80 % über das Heizsteuergerät 60, schließt, so daß der Anteil der Frischluft 18, die über den Wärmetauscher 44 geführt wird, sich verringert und insgesamt eine niedrigere Ausblastemperatur T_{A} erzielt wird. Fährt hingegen das Steuergerät 34 die Kühlmitteltemperatur bei der zweiten Söll-Kühlmitteltemperatur TK₂ von beispielsweise 90 °C (entsprechend Regelkurve 80), erfolgt diese Korrektur nicht. Hierdurch stellt sich die Temperaturmischklappe 48 auf den vom Heizsteuergerät 60 entsprechend der Heizleistungsanforderung 80 % vorgegebenen Offenstellung ein. Hierbei wird eine Ausblastemperatur T_{A} von zirka 70 °C erreicht. Es wird deutlich, daß bei gleichen Heizleistungsanforderungen HLA über das Korrektursignal des Steuergerätes 34 unterschiedliche Offenstellungen der Temperaturmischklappe 48 vorgebbar sind. Diese Offenstellungen richten sich nach der gerade aktuellen Kühlmitteltemperatur, das heißt entweder nach der ersten Soll-Kühlmitteltemperatur TK₁ oder der zweiten Soll-Kühlmitteltemperatur TK₂.

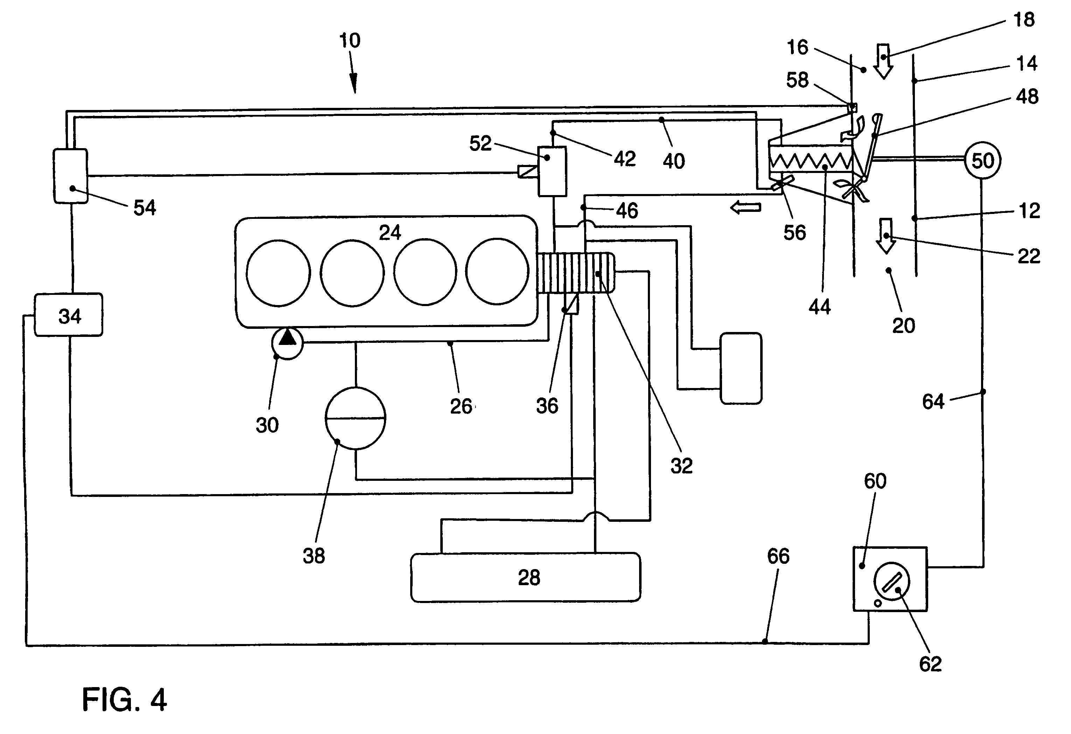

Figur 4 zeigt ein weiteres Ausführungsbeispiel einer Heizungsanlage 10 in einem Blockschaltbild, wobei wiederum gleiche Teile wie in Figur 1 mit gleichen Bezugszeichen versehen und nicht nochmals erläutert sind. Innerhalb des Vorlaufes 42 des Heizkreislaufes 40 ist hier ein Vorlaufregelventil 52 angeordnet, daß durch ein Steuergerät 54 ansteuerbar ist. Das Steuergerät 54 ist mit einem Temperaturfühler 56 und einem Kontaktschalter 58 der Temperaturmischklappe 48 verbunden.

Die Funktion der Anordnung gemäß Figur 4 ist, daß über den Temperatursensor 56 und/oder den Schließkontakt 58 festgestellt wird, daß die Heizleistungsanforderung bei 0 % liegt. Bei einer Heizleistungsanforderung von 0 % wird über das Heizungssteuergerät 60 der Stellantrieb 50 so angesteuert, daß die Temperaturmischklappe 48 vollständig schließt, so daß der Kontaktschalter 58 betätigt wird. Ferner wird über den Temperaturfühler 56 erfaßt, daß keine Wärmeenergieabnahme über den Wärmetauscher 44 erfolgt. Diese Signale werden vom Steuergerät 54 verarbeitet, das daraufhin das Rücklaufregelventil im Heizkreis 40 schließt. Hierdurch wird erreicht, daß eine unnötige Beaufschlagung des Wärmetauschers 44 mit dem auf Solltemperatur gefahrenen Kühlmittel nicht erfolgt. Insgesamt wird eine Verringerung einer Heizlast für das Kanalsystem 14 und gegebenenfalls in diese integrierte Strömungsmaschinen, Kältemaschinen oder dergleichen erhalten.

## Patentansprüche

1. Heizungsanlage (10) für den Innenraum eines Fahrzeuges, das über eine flüssigkeitsgekühlte Brennkraftmaschine (24) antreibbar ist, wobei ein Kühlkreislauf (26) für die Brennkraftmaschine (24) eine Fördereinrichtung (30) für ein Kühlmittel aufweist, der Kühlkreislauf (26) mit einem Heizkreislauf (40) verbunden ist, im Heizkreislauf (40) ein Heizgerät (12) angeordnet ist, das in Abhängigkeit einer Heizleistungsanforderung eine Wärmeenergie an einen Luftvolumenstrom abgibt, und der Luftvolumenstrom über ein Kanalsystem (14) an wenigstens einem Auslaß in den Innenraum des Fahrzeuges geleitet wird, in den Kühlkreislauf (26) eine von einem Steuergerät (34) ansteuerbare Steuereinrichtung (32) integriert ist, die eine erste Soll-Kühlmitteltemperatur einregelt, und die in Abhängigkeit wenigstens eines Betriebsparameters des Fahrzeuges eine Veränderung der ersten Soll-Kühlmitteltemperatur (TK1) auf eine zweite Soll-Kühlmitteltemperatur (TK2) auslöst (Kennfeld-Kühlung), **dadurch gekennzeichnet, daß** in Abhängigkeit der Heizleistungsanforderung (HLA) wenigstens eine der Soll-Kühlmitteltemperaturen (TK1, TK2) verändert ist.

2. Heizungsanlage nach Anspruch 1, **dadurch gekennzeichnet, daß** die eine Differenz zwischen den Soll-Kühlmitteltemperaturen (TK1, TK2) mit steigender Heizleistungsanforderung (HLA) verändert, insbesondere verkleinert ist.

3. Heizungsanlage nach einem der vorhergehenden Ansprüche, **dadurch gekennzeichnet, daß** die Veränderung der Soll-Kühlmitteltemperatur (TK1, TK2) bei unterschiedlich hoher Heizleistungsanforderung (HLA) unterschiedlich ist.

4. Heizungsanlage nach einem der vorhergehenden Ansprüche, **dadurch gekennzeichnet, daß** in Abhängigkeit der Heizleistungsanforderung (HLA) die erste (höhere) Soll-Kühlmitteltemperatur (TK1) abgesenkt und/oder die zweite (tiefere) Soll-Kühlmitteltemperatur (TK2) angehoben ist.

5. Heizungsanlage nach einem der vorhergehenden Ansprüche, **dadurch gekennzeichnet, daß** das Steuergerät (34) ein Speicherelement aufweist, in dem Algorithmen zur Einstellung der Soll-Kühlmitteltemperaturen (TK1, TK2) abgelegt sind.

6. Heizungsanlage nach einem der vorhergehenden Ansprüche, **dadurch gekennzeichnet, daß** die Heizungsanlage (10) ein Heizungssteuergerät (60) umfaßt, das ein Stellmittel (62) aufweist, dessen Einstellung der Heizleistungsanforderung (HLA) entspricht, und das ein der Einstellung entsprechendes Steuersignal an das Steuergerät (34) gibt.

7. Heizungsanlage nach Anspruch 6, **dadurch gekennzeichnet, daß** das Stellmittel (62) ein Potentiometer ist.

8. Heizungsanlage nach einem der vorhergehenden Ansprüche, **dadurch gekennzeichnet, daß** die Kühlmitteltemperatur (TK) mittels im Steuergerät (34) abgelegter Regelkurven (70, 72, 74, 76, 78, 80) eingestellt ist.

9. Heizungsanlage nach einem der vorhergehenden Ansprüche, **dadurch gekennzeichnet, daß** die erste Soll-Kühlmitteltemperatur (TK1) entsprechend einer Regelkurve (84) und die zweite Soll-Kühlmitteltemperatur (TK2) entsprechend einer Regelkurve (86) eingestellt ist.

10. Heizungsanlage nach einem der vorhergehenden Ansprüche, **dadurch gekennzeichnet, daß** die Regelkurven (84, 86) entsprechend der Heizleistungsanforderung (HLA) auf unterschiedlichen Abschnitten der Regelkurven (70, 72, 74, 76, 78, 80) verlaufen.

11. Heizungsanlage nach Anspruch 10, **dadurch gekennzeichnet, daß** die Regelkurven (84, 86) bei vorgebbaren Heizleistungsanforderungen (HLA) zwischen den Regelkurven (70, 72, 74, 76, 78, 80) springen.

12. Heizungsanlage nach Anspruch 10, **dadurch gekennzeichnet, daß** die Regelkurven (84, 86) über der Heizleistungsanforderung (HLA) kontinuierlich verlaufen.

13. Heizungsanlage (10) für den Innenraum eines Fahrzeuges, das über eine flüssigkeitsgekühlte Brennkraftmaschine (24) antreibbar ist, wobei ein Kühlkreislauf (26) für die Brennkraftmaschine (24) eine Fördereinrichtung (30) für ein Kühlmittel aufweist, der Kühlkreislauf (26) mit einem Heizkreislauf (40) verbunden ist, im Heizkreislauf (40) ein Heizgerät (12) angeordnet ist, das in Abhängigkeit einer Heizleistungsanforderung eine Wärmeenergie an einen Luftvolumenstrom abgibt, und der Luftvolumenstrom über ein Kanalsystem (14) an wenigstens einem Auslaß in den Innenraum des Fahrzeuges geleitet wird, in den Kühlkreislauf (26) eine von einem Steuergerät (34) ansteuerbare Steuereinrichtung (32) integriert ist, die eine erste Soll-Kühlmitteltemperatur einregelt, und die in Abhängigkeit wenigstens eines Betriebsparameters des Fahrzeuges eine Veränderung der ersten Soll-Kühlmitteltemperatur (TK1) auf eine zweite Soll-Kühlmitteltemperatur auslöst (TK2) (Kennfeld-Kühlung), **dadurch gekennzeichnet, daß** zu einem Vorlauf (42) des Heizkreislaufes (40) ein Vorlaufregelventil (52) angeordnet ist, das in Abhängigkeit einer Heizleistungsanforderung (HLA) den Vorlauf (40) drosselt.

14. Heizungsanlage nach Anspruch 13, **dadurch gekennzeichnet, daß** das Vorlaufregelventil (52) bei einer Heizleistungsanforderung (HLA) von 0% den Vorlauf (40) schließt.

15. Heizungsanlage nach Anspruch 13, **dadurch gekennzeichnet, daß** das Steuergerät (54) für das Vorlaufregelventil (52) durch einen Kontaktschalter (58) und/oder einen Temperatursensor (56) im Heizkreislauf (40) ansteuerbar ist.

16. Heizungsanlage (10) für den Innenraum eines Fahrzeuges, das über eine flüssigkeitsgekühlte Brennkraftmaschine (24) antreibbar ist, wobei ein Kühlkreislauf (26) für die Brennkraftmaschine (24) eine Fördereinrichtung (30) für ein Kühlmittel aufweist, der Kühlkreislauf (26) mit einem Heizkreislauf (40) verbunden ist, im Heizkreislauf (40) ein Heizgerät (12) angeordnet ist, das in Abhängigkeit einer Heizleistungsanforderung eine Wärmeenergie an einen Luftvolumenstrom abgibt, und der Luftvolumenstrom über ein Kanalsystem (14) an wenigstens einem Auslaß in den Innenraum des Fahrzeuges geleitet wird, in den Kühlkreislauf (26) eine von einem Steuergerät (34) ansteuerbare Steuereinrichtung (32) integriert ist, die eine erste Soll-Kühlmitteltemperatur einregelt, und- die in Abhängigkeit wenigstens eines Betriebsparameters des Fahrzeuges eine Veränderung der ersten Soll-Kühlmitteltemperatur (TK1) auf eine zweite Soll-Kühlmitteitemperatur (TK2) auslöst (Kennfeld-Kühlung), **dadurch gekennzeichnet, daß** ein von einem Heizungssteuergerät (60) generiertes Signal für einen Stellantrieb (50) einer im Heizgerät (12) integrierten Temperaturmischklappe (48) durch ein von der Kühlmitteltemperatur (TK) abhängiges Steuersignal verändert ist.

## Claims

1. Heating system (10) for the interior of a vehicle, which is drivable via a liquid-cooled internal combustion engine (24), a cooling circuit (26) for the internal combustion engine (24) having a conveying device (30) for a coolant, the cooling circuit (26) being connected to a heating circuit (40), a heating apparatus (12) being disposed in the heating circuit (40), which heating apparatus releases thermal energy to an air volume flow in dependence on a thermal energy requirement, and the air volume flow being conducted into the interior of the vehicle via a channel system (14) at at least one outlet, a control device (32), which is actuatable by a control apparatus (34), being incorporated in the cooling circuit (26), which control device adjusts a first desired coolant temperature and, in dependence on at least one operational parameter of the vehicle, triggers a change from the first desired coolant temperature (TK1) to a second desired coolant temperature (TK2) (performance graph cooling), **characterised in that** at least one of the desired coolant temperatures (TK1, TK2) is changed in dependence on the thermal energy requirement (HLA).

2. Heating system according to claim 1, **characterised in that** the one difference between the desired coolant temperatures (TK1, TK2) is changed, more especially reduced, with an increasing thermal energy requirement (HLA).

3. Heating system according to one of the preceding claims, **characterised in that** the change in the desired coolant temperature (TK1, TK2) is variable with a variably high thermal energy requirement (HLA).

4. Heating system according to one of the preceding claims, **characterised in that**, in dependence on the thermal energy requirement (HLA), the first (higher) desired coolant temperature (TK1) is lowered and/or the second (lower) desired coolant temperature (TK2) is raised.

5. Heating system according to one of the preceding claims, **characterised in that** the control apparatus (34) has a storage element, in which algorithms for setting the desired coolant temperatures (TK1, TK2) are deposited.

6. Heating system according to one of the preceding claims, **characterised in that** the heating system (10) includes a heating control apparatus (60), which has a setting means (62), the setting of which corresponds to the thermal energy requirement (HLA), and which means issues a control signal, corresponding to the setting, to the control apparatus (34).

7. Heating system according to claim 6, **characterised in that** the setting means (62) is a potentiometer.

8. Heating system according to one of the preceding claims, **characterised in that** the coolant temperature (TK) is set by means of regulation curves (70, 72, 74, 76, 78, 80) deposited in the control apparatus (34).

9. Heating system according to one the preceding claims, **characterised in that** the first desired coolant temperature (TK1) is set according to one regulation curve (84), and the second desired coolant temperature (TK2) is set according to one regulation curve (86).

10. Heating system according to one of the preceding claims, **characterised in that** the regulation curves (84, 86), corresponding to the thermal energy requirement (HLA), travel along different portions of the regulation curves (70, 72, 74, 76, 78, 80).

11. Heating system according to claim 10, **characterised in that** the regulation curves (84, 86) jump with prescribable thermal energy requirements (HLA) between the regulation curves (70, 72, 74, 76, 78, 80).

12. Heating system according to claim 10, **characterised in that** the regulation curves (84, 86) extend continuously above the thermal energy requirement (HLA).

13. Heating system (10) for the interior of a vehicle, which is drivable via a liquid-cooled internal combustion engine (24), a cooling circuit (26) for the internal combustion engine (24) having a conveying device (30) for a coolant, the cooling circuit (26) being connected to a heating circuit (40), a heating apparatus (12) being disposed in the heating circuit (40), which heating apparatus releases thermal energy to an air volume flow in dependence on a thermal energy requirement, and the air volume flow being conducted into the interior of the vehicle via a channel system (14) at at least one outlet, a control device (32), which is actuatable by a control apparatus (34), being incorporated in the cooling circuit (26), which control device adjusts a first desired coolant temperature and, in dependence on at least one operational parameter of the vehicle, triggers a change from the first desired coolant temperature (TK1) to a second desired coolant temperature (TK2) (performance graph cooling), **characterised in that** a forward movement regulating valve (52) is disposed relative to a forward movement (42) of the heating circuit (40) and throttles the forward movement (40) in dependence on a thermal energy requirement (HLA).

14. Heating system according to claim 13, **characterised in that** the forward movement regulating valve (52) closes the forward movement (40) at a thermal energy requirement (HLA) of 0 %.

15. Heating system according to claim 13, **characterised in that** the control apparatus (54) for the forward movement regulating valve (52) is actuatable by a contact switch (58) and/or a temperature sensor (56) in the heating circuit (40).

16. Heating system (10) for the interior of a vehicle, which is drivable via a liquid-cooled internal combustion engine (24), a cooling circuit (26) for the internal combustion engine (24) having a conveying device (30) for a coolant, the cooling circuit (26) being connected to a heating circuit (40), a heating apparatus (12) being disposed in the heating circuit (40), which heating apparatus releases thermal energy to an air volume flow in dependence on a thermal energy requirement, and the air volume flow being conducted into the interior of the vehicle via a channel system (14) at at least one outlet, a control device (32), which is actuatable by a control apparatus (34), being incorporated in the cooling circuit (26), which control device adjusts a first desired coolant temperature and, in dependence on at least one operational parameter of the vehicle, triggers a change from the first desired coolant temperature (TK1) to a second desired coolant temperature (TK2) (performance graph cooling), **characterised in that** a signal, generated by a heating control apparatus (60), for a setting drive (50) of a temperature mixing valve (48), incorporated in the heating apparatus (12), is changed by a control signal which is dependent on the coolant temperature (TK).

## Revendications

1. Chauffage (10) pour l'habitacle d'un véhicule pouvant être mis en mouvement par un moteur à combustion (24) à refroidissement liquide, dans lequel un circuit de refroidissement (26) pour le moteur à combustion (24) comprend un dispositif de pompage (30) pour un fluide de refroidissement, le circuit de refroidissement (26) est relié à un circuit de chauffage (40) dans lequel est disposé un appareil de chauffage (12) qui fournit une énergie calorifique à un débit volumétrique d'air en fonction d'une demande en puissance de chauffage, et le débit volumétrique d'air est conduit par un système de canalisation (14) à haut moins une bouche dans l'habitacle du véhicule, dans le circuit de refroidissement (26) est intégré un dispositif de commande (32) pilotable par un appareil de commande (34), le dispositif de commande (32) règle une première consigne de température du fluide de refroidissement et déclenche en fonction d'au moins un paramètre de fonctionnement du véhicule un passage de la première consigne de température (TK1) du fluide de refroidissement à une deuxième consigne de température (TK2) du fluide de refroidissement, (refroidissement à diagramme caractéristique), **caractérisé en ce que** l'une au moins des consignes de températures (TK1, TK2) du fluide de refroidissement est modifiée en fonction de la demande en puissance de chauffage (HLA).

2. Chauffage selon la revendication 1, **caractérisé en ce qu'**une différence entre les consignes de température (TK1, TK2) du fluide de refroidissement est modifiée, en particulier diminuée, lorsque la demande en puissance de chauffage (HLA) augmente.

3. Chauffage selon l'une des revendications précédentes, **caractérisé en ce que** la modification des consignes de température (TK1, TK2) du fluide de refroidissement est différente lorsque la demande en puissance de chauffage (HLA) est différemment grande.

4. Chauffage selon l'une des revendications précédentes, **caractérisé en ce qu'**en fonction de la demande en puissance de chauffage (HLA), la première (relativement haute) consigne de température (TK1) du fluide de refroidissement est diminuée et/ou la deuxième (relativement basse) consigne de température (TK2) du fluide de refroidissement est augmentée.

5. Chauffage selon l'une des revendications précédentes, **caractérisé en ce que** l'appareil de commande (34) comprend un élément de mémoire contenant des algorithmes pour le réglage des consignes de température (TK1, TK2) du fluide de refroidissement.

6. Chauffage selon l'une des revendications précédentes, **caractérisé en ce que** le chauffage (10) comprend un appareil de commande de chauffage (60) qui comprend un moyen de réglage (62), dont le réglage correspond à la demande en puissance de chauffage (HLA) et qui délivre à l'appareil de commande (34) un signal de commande correspondant au réglage.

7. Chauffage selon la revendication 6, **caractérisé en ce que** l'organe de réglage (62) est un potentiomètre.

8. Chauffage selon l'une des revendications précédentes, **caractérisé en ce que** la température du fluide de refroidissement (TK) est réglée au moyen de courbes de régulation (70, 72, 74, 76, 78, 80) enregistrées dans l'appareil de commande (34).

9. Chauffage selon l'une des revendications précédentes, **caractérisé en ce que** la première consigne de température (TK1) du fluide de refroidissement est réglée en correspondance avec une courbe de régulation (84) et la seconde consigne de température (TK2) du fluide de refroidissement est réglée en correspondance avec une courbe de régulation (86).

10. Chauffage selon l'une des revendications précédentes, **caractérisé en ce que** les courbes de régulation (84, 86) suivent différents tronçons des courbes de régulation (70, 72, 74, 76, 78, 80) en correspondance avec la demande en puissance de chauffage (HLA).

11. Chauffage selon la revendication 10, **caractérisé en ce que** les courbes de régulation (84, 86) sautent entre les courbes de régulation (70, 72, 74, 76, 78, 80) pour des demandes en puissance de chauffage (HLA) pouvant être prédéterminées.

12. Chauffage selon la revendication 10, **caractérisé en ce que** les courbes de régulation (84, 86) s'étendent de façon continue sur la plage de demande en puissance de chauffage (HLA).

13. Chauffage (10) pour l'habitacle d'un véhicule pouvant être mis en mouvement par un moteur à combustion (24) à refroidissement liquide, dans lequel un circuit de refroidissement (26) pour le moteur à combustion (24) comprend un dispositif de pompage (30) pour un fluide de refroidissement, le circuit de refroidissement (26) est relié à un circuit de chauffage (40) dans lequel est disposé un appareil de chauffage (12) qui fournit une énergie calorifique à un débit volumétrique d'air en fonction d'une demande en puissance de chauffage, et le débit volumétrique d'air est conduit par un système de canalisation (14) à haut moins une bouche dans l'habitacle du véhicule, dans le circuit de refroidissement (26) est intégré un dispositif de commande (32) pilotable par un appareil de commande (34), le dispositif de commande (32) règle une première consigne de température du fluide de refroidissement et déclenche en fonction d'au moins un paramètre de fonctionnement du véhicule un passage de la première consigne de température (TK1) du fluide de refroidissement à une deuxième consigne de température (TK2) du fluide de refroidissement, (refroidissement à diagramme caractéristique), **caractérisé en ce qu'**à une entrée (42) du circuit de chauffage (40) est agencée une vanne de régulation de départ (52), qui ferme plus ou moins le départ (40) en fonction d'une demande en puissance de chauffage (HLA).

14. Chauffage selon la revendication 13, **caractérisé en ce que** pour une demande en puissance de chauffage (HLA) de 0 % la vanne de régulation de départ (52) ferme le départ (40).

15. Chauffage selon la revendication 13, **caractérisé en ce que** l'appareil de commande (54) pour la vanne de régulation de départ (52) est pilotable par un commutateur à contact (58) et/ou un capteur de température (56) dans le circuit de chauffage (40).

16. Chauffage (10) pour l'habitacle d'un véhicule pouvant être mis en mouvement par un moteur à combustion (24) à refroidissement liquide, dans lequel un circuit de refroidissement (26) pour le moteur à combustion (24) comprend un dispositif de pompage (30) pour un fluide de refroidlssement, le circuit de refroidissement (26) est relié à un circuit de chauffage (40) dans lequel est disposé un appareil de chauffage (12) qui fournit une énergie calorifique à un débit volumétrique d'air en fonction d'une demande en puissance de chauffage, et le débit volumétrique d'air est conduit par un système de canalisation (14) à haut moins une bouche dans l'habitacle du véhicule, dans le circuit de refroidissement (26) est intégré un dispositif de commande (32) pilotable par un appareil de commande (34), le dispositif de commande (32) règle une première consigne de température du fluide de refroidissement et déclenche en fonction d'au moins un paramètre de fonctionnement du véhicule un passage de la première consigne de température (TK1) du fluide de refroidissement à une deuxième consigne de température (TK2) du fluide de refroidissement, (refroidissement à diagramme caractéristique), **caractérisé en ce qu'**un signal généré par un appareil de commande de chauffage (60) pour un entraînement de réglage (50) d'un clapet de mélange de température (48) intégré dans l'appareil de chauffage (12) est modifié par un signal de commande dépendant de la température (TK) du fluide de refroidissement.
